# FASCICULE DE BREVET EUROPEEN

(11) **EP 2 274 146 B1**
(45) Date de publication et mention de la délivrance du brevet: **02.11.2016**
(21) Numéro de dépôt: 09745996.0
(22) Date de dépôt: 24.04.2009
(51) Int. Cl.: B29C 44/12, B29C 45/14, B29C 49/24

(54) **PROCEDE POUR REALISER AU MOINS UNE ZONE EN RELIEF SUR UN RECIPIENT EN MATIERE PLASTIQUE**
VERFAHREN ZUR HERSTELLUNG MINDESTENS EINER RELIEFZONE AUF EINEM PLASTIKBEHÄLTER
METHOD FOR PRODUCING AT LEAST ONE RAISED AREA ON A PLASTIC CONTAINER

(30) Priorité: 30.04.2008 FR 0852939
(43) Date de publication de la demande: 19.01.2011
(73) Titulaire: Coveris Flexibles (Angoulême) France, 16340 L'Isle-d'Espagnac (FR)
(72) Inventeur: AINS, Yannick, F-16600 Magnac Sur Touvre (FR)
(74) Mandataire: Cabinet Laurent & Charras
(86) Numéro de dépôt international: PCT/FR2009/050766
(87) Numéro de publication internationale: WO 2009/138677

(56) Documents cités:
- EP-A- 0 659 647
- EP-B1- 0 580 777
- WO-A-02/26484
- GB-A- 2 428 402
- JP-A- 53 141 384
- JP-A- 2007 153 359
- US-A- 5 908 590

## Description

L'invention se rattache au secteur technique des récipients et des emballages pour la présentation, la dégustation de produits du type solide ou liquide.

Le but recherché selon l'invention est de réaliser des emballages ou récipients en matière plastique présentant une ou des zones en relief. Généralement, dans le domaine technique des emballages en matière plastique rigide ou semi-rigide, la ou les zones en relief sont obtenues par thermoformage. On rappelle, d'une manière parfaitement connue pour un homme du métier, que l'opération de thermoformage consiste à chauffer la matière plastique afin de la ramollir et à profiter de cette ductilité pour la mettre en forme dans l'empreinte d'un moule présentant la ou les zone(s) en relief à obtenir. Sous un effet de refroidissement, la matière se solidifie lui permettant de garder la forme recherchée.

Il en résulte, qu'avec cette solution, les zones apparaissent en relief du côté externe d'un récipient par exemple vont apparaître en creux du côté interne dudit récipient, ou inversement étant donné qu'il y a déformation de la matière. Autrement dit, cette solution de thermoformage ne permet pas d'obtenir un récipient quelconque avec un intérieur entièrement lisse et un extérieur présentant une ou des zones en relief ou en creux.

Le document WO 02/26484 concerne un procédé pour réaliser des articles décorés dans un moule. Un film est disposé dans l'empreinte d'un moule, dans laquelle on injecte simultanément une matière plastique avec un agent d'expansion.

Le document EP 0659647 concerne un procédé pour produire un récipient en papier thermiquement isolant.

Le document US-A-5 908 590 concerne un procédé pour produire un récipient en matière plastique.

L'invention s'est fixée pour but de remédier à ces inconvénients d'une manière simple, sûre, efficace et rationnelle.

Le problème que se propose de résoudre l'invention est de réaliser un récipient de forme géométrique quelconque dont l'intérieur est parfaitement lisse, tandis que la totalité ou une partie de l'extérieur peut présenter une ou des zones en relief sous forme de logos, dessins et/ou des écritures.

Pour atteindre ces objectifs, il a été conçu et mis au point un procédé qui, à la base, utilise un principe parfaitement connu pour un homme du métier sous le nom de IML, selon lequel on introduit, directement dans un moule d'injection, une étiquette réalisée généralement en polypropylène. L'étiquette est noyée dans l'emballage par fusion partielle de sa face interne et a généralement pour fonction d'assurer la décoration de la totalité ou d'une partie de l'emballage.

A partir de ce principe connu d'IML, compte tenu du problème posé à résoudre, selon l'invention, le procédé pour réaliser au moins une zone en relief sur un récipient en matière plastique, de forme quelconque, est remarquable par la combinaison des étapes telles que définies dans la revendication 1.

Avantageusement, le film est constitué de couches de polypropylène blanc expansé.

Pour résoudre le problème posé d'obtenir les effets de reliefs avec pour objectif d'obtenir une structure de la matière plastique du type micro-alvéolaire, on injecte la matière plastique selon la technologie connue sous la marque MUCELL®.

Des résultats avantageux ont été obtenus avec un film d'épaisseur de 38 µm et d'une densité de 550 kg/m3.

L'invention concerne également les récipients résultant de la mise en oeuvre du procédé selon l'invention.

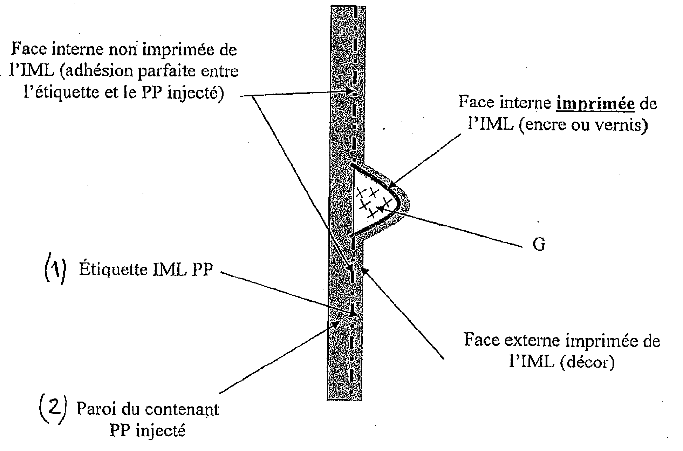

L'invention est exposée ci-après plus en détail à l'aide de l'unique figure des dessins qui montre le principe à la base du procédé selon l'invention.

Selon l'invention, la ou les zones en relief que l'on veut obtenir sur un récipient en matière plastique de forme générale quelconque, est/sont obtenu(e)s à partir d'une étiquette IML (1). Cette étiquette IML (1) est réalisée à partir d'un film d'épaisseur comprise entre 30 et 50 µm et d'une densité de 550 kg/m3. Des résultats avantageux ont été obtenus avec un film d'épaisseur de 38 µm.

Selon une caractéristique de l'invention, on imprime, sur l'une des faces au moins de l'étiquette (1), à savoir le verso de cette dernière, une encre ou vernis de caractéristiques appropriées correspondant à la ou les zones que l'on veut voir apparaître en relief. L'impression s'effectue par tout procédé industriel connu, tel que flexographie, héliographie, Offset, ... Avantageusement, le recto et le verso d'une étiquette sont imprimés pour obtenir une meilleure qualité de décors et du relief sur les zones choisies. On rappelle que ces zones en relief peuvent être constituées par des dessins, des logos et/ou des écritures.

Ainsi préparées, les étiquettes IML sont découpées en fonction des applications recherchées et transférées par tous moyens connus et appropriés tels que des robots, pour être disposées dans la ou les empreintes d'un moule correspondant au récipient à obtenir.

Une matière plastique (2), qui peut être du polypropylène, est ensuite injectée.

D'une manière surprenante et inattendue, il est apparu que le procédé d'injection connu sous la marque MUCELL^{®}, en combinaison avec une étiquette IML selon les caractéristiques précitées, permet d'obtenir des effets de relief de la ou des zones imprimées de l'étiquette.

Ce procédé d'injection connu sous la marque MUCELL® ressort, par exemple, de l'enseignement du brevet EP 0580777.

Selon l'enseignement de ce brevet, on introduit dans la matière à injecter un agent d'expansion (du gaz (G), par exemple) à une première température et sous une première pression selon laquelle l'agent d'expansion est un fluide super critique. On transforme le mélange de matière et de fluide dans une solution à phase unique complète. On fait ensuite varier la température et la pression, de manière à obtenir une matière expansée super micro-cellulaire contenant un grand nombre de vides ou d'alvéoles convenablement réparti(e)s à l'intérieur de ladite matière.

Ce procédé spécifique d'injection permet d'obtenir une structure interne micro-alvéolaire ou micro-cellulaire en observant que, non seulement, les zones encrées de l'étiquette IML n'adhèrent pas au polypropylène fondu, mais l'agent d'expansion vient s'emprisonner entre la paroi du récipient et l'étiquette IML créant l'effet de relief recherché au niveau desdites zones encrées. Il en résulte des effets visuels particulièrement attractifs.

Sans pour cela sortir du cadre de l'invention, on observe que ces zones en relief, non seulement, peuvent avoir une fonction esthétique, mais peuvent également avoir un effet technique. Par exemple, on peut imprimer au verso de l'étiquette IML des stries ou des petites bandes qui, après injection dans les conditions indiquées et démoulage, vont apparaître en relief en créant une barrière thermique, compte tenu du gaz injecté ou autre agent d'expansion.

Selon l'invention, il est également possible d'obtenir du relief, d'une manière très flexible et très précise, afin de réaliser du braille sur les pièces résultant du procédé.

Sans pour cela sortir du cadre de l'invention, le procédé peut être utilisé avec d'autres matières que le PP, telles que le PS et/ou le PET.

Les avantages ressortent bien de la description, en particulier on souligne:
- la facilité d'utilisation ;
- les coûts réduits ;
- la qualité du résultat obtenu ;
- la possibilité d'obtenir un récipient de forme géométrique quelconque avec un intérieur entièrement lisse, la ou les zones en relief apparaissant uniquement à l'extérieur ;
- la possibilité d'obtenir un récipient avec des caractéristiques isolantes, notamment isothermes ;
- la possibilité de lutter contre les contrefaçons, le type du relief étant très difficile à reproduire ;
- la possibilité de changer facilement et rapidement le graphisme ou autre zone en relief souhaitée.

## Revendications

1. Procédé pour réaliser au moins une zone en relief sur un récipient en matière plastique, tel que :
- on prend une étiquette IML (1) réalisée à partir d'un film d'épaisseur comprise entre 30 et 50 µm; on imprime sur l'une des faces au moins du film la ou les zones au moyen d'une encre ou d'un vernis ;
- on dispose, dans l'empreinte d'un moule, le film, de sorte que la zone imprimée ou les zones imprimées n'est pas ou ne sont pas en contact avec ledit moule ;
- on injecte, dans l'empreinte équipée du film, la matière plastique (2) simultanément avec un agent d'expansion (G), à une première température et sous une première pression, selon laquelle l'agent d'expansion est un fluide super critique, on transforme le mélange de matière et de fluide dans une solution à_phase unique complète et on fait ensuite varier la température et la pression, de manière à obtenir une matière expansée super micro-cellulaire contenant un grand nombre de vides ou d'alvéoles convenablement réparti(e)s à l'intérieur de ladite matière pour créer une structure interne micro-alvéolaire, de sorte que ladite zone imprimée ou lesdites zones imprimées n'adhère(nt) pas à la matière plastique fondue, ledit agent d'expansion venant s'emprisonner entre l'étiquette et la matière plastique, créant un effet de relief au niveau de la ou des zone(**s**) imprimée(s)**.**

2. Procédé selon la revendication 1, **caractérisé en ce que** le film est constitué de couches de polypropylène blanc expansé.

3. Procédé selon la revendication 1, **caractérisé en ce que** l'épaisseur du film est de 38 µm.

4. Procédé selon la revendication 1, **caractérisé en ce que** la densité du film est de 550 kg/m3.

## Patentansprüche

1. Verfahren zur Herstellung eines aufgehöhten Bereichs auf einem Kunststoffbehälter, wobei:
- ein IML-Etikett (1) aus 30 bis 50 µm starker Folie verwendet wird;
auf mindestens einer Seite der Folie ein oder mehrere Bereiche mit Tinte oder Lack bedruckt werden;
- die Folie in den Hohlraum einer Form gelegt wird, und zwar so, dass der bedruckte Bereich bzw. die bedruckten Bereiche die Form nicht berühren;
- der Kunststoff (2) zusammen mit einem Expansionsmittel (G) mit einer ersten Temperatur und unter einem ersten Druck, bei der das Expansionsmittel eine überkritische Flüssigkeit ist, in die mit der Folie versehene Hohlform gespritzt wird, das Material- und Flüssigkeitsgemisch in eine vollständige, einphasige Lösung umgewandelt wird und anschließend die Temperatur und der Druck geändert werden, um ein super-mikrozelluläres, expandiertes Material mit einer großen Anzahl von Hohlräumen und Zellen zu erhalten, welche innerhalb des Materials angemessen verteilt sind, um eine mikrozelluläre innere Struktur zu schaffen, bei der der bedruckte Bereich bzw. die bedruckten Bereiche nicht an dem geschmolzenen Kunststoff anhaften, wobei das Expansionsmittel zwischen dem Etikett und dem Kunststoff eingeschlossen wird und dadurch eine Aufllöhung im Bereich des bzw. der bedruckten Bereiche erzeugt wird.

2. Verfahren nach Anspruch 1, **dadurch gekennzeichnet, dass** die Folie aus expandierten, weißen Polypropylen-Schichten besteht.

3. Verfahren nach Anspruch 1, **dadurch gekennzeichnet, dass** die Folie eine Dicke von 38 µm hat.

4. Verfahren nach Anspruch 1, **dadurch gekennzeichnet, dass** die Folie eine Dichte von 550 kg/m³ hat.

## Claims

1. A method of producing at least one raised area on a container made of a plastics material, the method consisting in:
- taking an In-Mold Label or "IML" (1) produced from a film of thickness lying in the range 30 micrometers (µm) to 50 µm;
- printing the area(s) on at least one of the faces of the film using an ink or a varnish;
- placing the film in the cavity of a mold, so that the printed area or the printed areas is not/are not in contact with said mold;
- injecting, into the cavity as equipped with the film, the plastics material (2) simultaneously with an expansion agent (G), at a first temperature and at a first pressure at which the expansion agent is a supercritical fluid, transforming the mixture of material and of fluids into a complete single-phase solution and then causing the temperature and the pressure to vary, in such a manner as to obtain a super micro-cellular expanded material containing a large number of voids or cells that are suitably distributed inside said material so as to create a micro-cellular internal structure, so that said printed area or said printed areas do not adhere to the molten plastics material, said expansion agent coming to be trapped between the label and the plastics materials, creating a raised effect at the printed area(s).

2. Method according to claim 1, **characterized in that** the film is made up of layers of expanded white polypropylene.

3. Method according to claim 1, **characterized in that** the thickness of the film is 38 µm.

4. Method according to claim 1, **characterized in that** the density of the film is 550 kilograms per cubic meter (kg/m³).
